# EUROPÄISCHE PATENTSCHRIFT

(11) **EP 0 340 382 B1**
(45) Veröffentlichungstag und Bekanntmachung des Hinweises auf die Patenterteilung: **11.08.1993**
(21) Anmeldenummer: 89100760.1
(22) Anmeldetag: 18.01.1989
(51) Int. Cl.: B01J 47/00, C02F 1/42, C02F 9/00

(54) **Siebdeckel für einen Reinigungseinsatz in einer Wasseraufbereitungsvorrichtung mit einem Hohlrohr**
Screen cover for a cleaning insert in a water regeneration device with a hollow tube
Couvercle à tamis pour une garniture de nettoyage dans un dispositif d'épuration de l'eau avec un tube creux

(30) Priorität: 30.04.1988 DE 3814683
(43) Veröffentlichungstag der Anmeldung: 08.11.1989
(73) Patentinhaber: Brita Wasser-Filter-Systeme GmbH, D-65232 Taunusstein-Neuhof (DE)
(72) Erfinder: Hankammer, Heinz, D-6204 Taunusstein 4 (DE)
(74) Vertreter: Weber, Dieter, Dr.

(56) Entgegenhaltungen:
- EP-A- 0 219 004
- EP-A- 0 235 315
- DE-A- 3 535 679
- DE-A- 3 628 029
- DE-B- 1 536 772
- DE-B- 1 642 465
- US-A- 4 313 825

## Beschreibung

Die Erfindung betrifft einen Siebdeckel für einen Reinigungseinsatz in einer Wasseraufbereitungsvorrichtung, wobei der Siebdeckel auf einem konischen Flächenabschnitt Siebschlitze und in der Mitte eines erhabenen Ansatzes mindestens eine Entlüftungsöffnung aufweist und mit einem Hohlrohr mit einer Scheibe verbindbar ist.

Wasseraufbereitungsvorrichtungen verschiedenster Art sind bekannt, wobei unterschiedliche Formen von Siebdeckeln benutzt werden.

Bei einer bekannten Wasseraufbereitungsvorrichtung wird auf den oberen Rand eines Auffangbehälters ein oben offener und in der Mitte unten mit einer Hülse versehener Trichter aufgesetzt. In die unten offene Hülse wird ein Reinigungseinsatz so eingeschoben, daß der Siebdeckel etwa mit dem Trichterboden abschließt und der Siebboden mit dem unteren Ende der Hülse abschließt, die in den Auffangbehälter hineinragt. Zu reinigendes Wasser wird oben in den Trichter gegossen und läuft über die Siebschlitze im Siebdeckel durch den mit einem z.B. granulatförmigen Reinigungsmittel gefüllten Reinigungseinsatz unter Einwirkung der Schwerkraft nach unten durch den Siebboden hindurch und sammelt sich als aufbereitetes oder gereinigtes bzw. gefiltertes Wasser im Sammelbehälter.

Bei der bekannten Wasseraufbereitungsvorrichtung waren die Siebschlitze auf dem konischen Flächenabschnitt des Siebdekkels als konzentrische Kreise ausgebildet, die einen in der Mitte angeordneten erhabenen Ansatz umgeben. Auf diesen etwa fingerdicken Ansatz wird ein Hohlrohr mit einer schirmförmigen Scheibe aufgesteckt. Durch das Hohlrohr soll im oberen Teil des Siebdeckels angesammelte Luft nach oben entweichen, und die schirmförmige Scheibe dient dazu, beim Eingießen von frischem Wasser in den Trichter dafür zu sorgen, daß nicht unerwünschte Durchgangskanäle in dem Reinigungseinsatz beim Eingießen ausgespült werden. Beim Eingießen trifft vielmehr der Wasserstrahl auf die ringförmige Fläche der Scheibe und verteilt sich danach über den im wesentlichen horizontal liegenden, ringförmigen Trichterboden, von wo das zu reinigende Wasser in die Schlitze des Siebdeckels fließt.

Um dem Endverbraucher weitere Verbesserungen der bekannten Wasseraufbereitungsvorrichtungen anbieten zu können, sind Überlegungen angestellt worden, wo etwaige Nachteile nachgebessert werden könnten. So hat sich bei den konzentrisch angeordneten, ringförmigen Siebschlitzen gezeigt, daß eine Vernetzung nicht immer mit Sicherheit ausgeschaltet werden kann, so daß der Durchlauf des zu reinigenden Wassers durch Ausbildung, Lage und Anordnung der Siebschlitze teilweise behindert wird. Es hat sich auch gezeigt, daß das Hohlrohr nicht immer zuverlässig mit dem Siebdeckel so verbunden werden kann, daß der Endverbraucher den Reinigungseinsatz in seiner Gesamtheit mit einem Griff herausziehen kann, wenn er das Hohlrohr ergreift und in Richtung der Hauptachse der Vorrichtung nach oben herauszieht. Vielmehr hat sich manchmal das Hohlrohr mit der Scheibe vom Siebdeckel und damit vom Reinigungseinsatz gelöst.

Ein weiterer Nachteil ergibt sich für den Endverbraucher bei den bekannten Wasseraufbereitungsvorrichtungen, wenn das Reinigungsmittel nicht rechtzeitig ersetzt wird. Beispielsweise haben die heute bei den bekannten Vorrichtungen zumeist verwendeten Ionenaustauscher eine Kapazität zur Reinigung von etwa 60 bis 100 1 Wasser. Im normalen Haushalt kann also mit einer Wasseraufbereitungsvorrichtung der vorstehend bezeichneten Art ein einwandfreier und hygienischer Betrieb für die Dauer von zwei bis vier Wochen mit ein und demselben Reinigungseinsatz bzw. der darin enthaltenen Reinigungsmasse betrieben werden. In jedem Falle soll aus hygienischen Gründen das Reinigungsmittel, z.B. mit Ionenaustauscher, nicht viel länger als einen Monat in Benutzung sein. Danach sollte das Reinigungsmittel ausgewechselt werden. Es wäre also wünschenswert, eine zeitliche Anzeige vorzusehen, um rechtzeitig das Reinigungsmittel austauschen zu können.

Es sind auch schon Wasserreinigungsvorrichtungen bekannt, bei denen der Siebdeckel mit den konzentrischen Siebschlitzen fest mit dem Hohlrohr verbunden ist. Bei diesen Vorrichtungen kann zwar beim Ergreifen des Hohlrohres der Reinigungseinsatz mit Sicherheit zum Austausch aus der Hülse des Trichters herausgenommen werden, dieser Aufbau hat aber einen eben ausgestalteten Siebdeckel mit erheblichen Entlüftungsproblemen, wobei außerdem durch die Vernetzung der Siebschlitze die Durchlaufgeschwindigkeit des zu reinigenden Wassers zu klein ist.

Das Entlüftungsproblem spielte auch bei einer anderen Filterpatrone eine Rolle, bei welcher man auf eine ganz andere Ausgestaltung von Siebdeckel übergegangen ist, nämlich die konzentrische, ringförmige Gestalt der Siebschlitze verlassen hat zu Gunsten eines sehr flach ausgebildeten Siebdeckels mit einer kurzen zylindrischen Außenfläche, längs der kranzartig kleine, gerade Siebschlitze um den ganzen Umfang verteilt angeordnet sind. Auch bei dieser Filterpatrone hat sich wider Erwarten die Schwierigkeit mangelnder Entlüftung und zu großer Vernetzung der Siebschlitze ergeben, so daß man wieder auf andere Formen von Siebdeckeln mit konzentrisch kreisförmigen Siebschlitzen übergegangen ist.

Der Erfindung liegt nun die Aufgabe zugrunde, einen Siebdekkel der eingangs näher bezeichneten Art zu schaffen, dessen Funktion und Handhabe verbessert sind, insbesondere hinsichtlich Entlüftung und Bedienung durch den Endverbraucher, auch für den rechtzeitigen Austausch von Reinigungsmittel.

Diese Aufgabe wird erfindungsgemäß dadurch gelöst, daß die Siebschlitze im wesentlichen gerade sind und kranzartig auf dem etwa 1/3 bis 1/2 der Höhe des Siebdeckels einnehmenden kegelstumpfförmigen Flächenabschnitt angeordnet sind und daß auf der oberen, äußeren Ringfläche der Scheibe Markierungen vorgesehen sind, denen ein verstellbarer Zeiger zugeordnet ist, der an einem unverlierbar und drehbar am Hohlrohr angeordneten Arretierring angebracht ist. Obwohl die Ausgestaltung des Reinigungseinsatzes mit Hohlrohr und Scheibe verwendet wird, hat man erfindungsgemäß aus anderem Zusammenhang wieder die Überlegung aufgegriffen, die Siebschlitze im wesentlichen gerade auszugestalten und kranzartig am Siebdeckel anzuordnen. Hierbei werden die Siebschlitze im wesentlichen parallel zueinander liegen, und sie befinden sich vorzugsweise in gleichmäßigem Abstand voneinander. Die Richtung der geraden Siebschlitze ist im allgemeinen gleich der Richtung der Hauptachse des Trichters bzw. seiner Hülse oder auch des Hohlrohres. Ebenso denkbar ist aber auch die Anordnung der geraden Siebschlitze unter einem oder mehreren unterschiedlichen Winkeln zur Hauptachse des Reinigungseinsatzes. Erfindungsgemäß hat man festgestellt, daß die Wasserdurchlaufgeschwindigkeit unbeeinträchtigt bleibt bzw. ein guter Wassereintritt in den Reinigungseinsatz durch die Siebschlitze dann gewährleistet wird, wenn die ringförmige Fläche, längs welcher die Siebschlitze kranzartig angeordnet sind, etwa 1/3 bis etwa die Hälfte der Höhe des gesamten Siebdeckels einnimmt. Mit anderen Worten ist man entgegen der bekannten Siebdeckelform mit den geraden Siebschlitzen dazu übergegangen, den Siebdeckel etwa zwei bis dreimal so hoch auszugestalten wie die Höhe des kegelstumpfförmigen, ringförmigen Flächenabschnittes mit den Siebschlitzen ist. Dadurch kann nämlich mit dem zu reinigenden Wasser etwa mitgerissene Luft oder Gase, welche in die Siebschlitze eintreten, sich im Raum über den Siebschlitzen sammeln und durch das Hohlrohr austreten.

Bei dem eingangs beschriebenen Siebdeckel mit dem Hohlrohr waren Öffnungen zwischen dem Hohlrohr und dem erhabenen Ansatz des Siebdeckels vorgesehen oder wenigstens nicht vermeidbar, so daß eine Entlüftung dort bisweilen Schwierigkeiten bereitete. Durch die erfindungsgemäßen Maßnahmen ist die Funktion des Siebdeckels wesentlich verbessert, weil der Wassereintritt durch die Siebschlitze nicht mehr beeinträchtigt wird und auch die Entlüftung wesentlich verbessert ist.

Hinzu kommt auch die erhebliche Verbesserung der Handhabe für den Endverbraucher. Nicht nur, daß der Endverbraucher den Reinigungseinsatz durch Ergreifen des Hohlrohres besser herausnehmen und dadurch handhaben kann, der Endverbraucher kann auch das Reinigungsmittel rechtzeitig austauschen, weil er durch die Markierungen und den verstellbaren Zeiger die Zeit messen kann seit Einfüllen des letzten Reinigungsmittels. Durch die erfindungsgemäßen Maßnahmen kann der Endverbraucher entweder beim Kauf des neuen Reinigungseinsatzes oder der Wasseraufbereitungsvorrichtung einerseits oder beim Austausch des Reinigungsmittels im Einsatz andererseits den Zeiger durch Drehen mittels Arretierring auf eine bestimmte Markierung stellen, z.B. einen Monatsnamen, so daß nach Ablauf von etwa 30 Tagen eine klare Anzeige gegeben ist, daß das Reinigungsmittel ausgetauscht werden sollte. Hierbei ist es vorteilhaft, daß der Zeiger über den Arretierring unverlierbar und dennoch drehbar am Hohlrohr angeordnet ist.

Für die Verbesserung der Funktion und hier insbesondere der Entlüftung ist die Ausgestaltung des Siebdeckels anders geworden. Erfindungsgemäß ist nämlich vorgesehen, daß bei weiterer Ausgestaltung des Siebdeckels der Arretierring in einer ringförmigen Hinterschneidung gehalten ist und daß zwischen dieser Hinterschneidung und der Scheibe am Hohlrohr ein Kegelstumpf mit Innengewinde angeordnet ist, der auf das Außengewinde des erhabenen Ansatzes des Siebdeckels aufschraubbar ist. Während bei dem bekannten Reinigungseinsatz der Paßsitz oft ungenügend war oder die Klemmverbindung zwischen dem Hohlrohr und dem Siebdeckel im Laufe der Zeit durch Abnutzung oder Deformierungen nicht zuverlässig war, ist die Funktion für die Bedienung des Endverbrauchers mittels Gewinde erheblich verbessert. Damit ist auch die Entlüftung verbessert, weil bei einem definiert festen Sitz des Hohlrohres auf dem Siebdeckel die Luftführungen verbessert sind.

Es versteht sich, daß man die ringförmige Hinterschneidung für den Arretierring dadurch erreichen kann, daß man auf wenigstens einer Seite der ringförmigen Hinterschneidung einen Wulst oder mehrere Nocken vorsieht, welche den Arretierring haltern. Verwendet man den Kegelstumpf mit Innengewinde, der einen größeren Durchmesser als das Hohlrohr hat, dann ist die eine Haltekante für den Arretierring bereits durch den Kegelstumpf gegeben, und Nocken oder Wulste brauchen nur noch auf der anderen Seite der Hinterschneidung gegenüber dem Kegelstumpf ausgebildet zu werden.

Man kann das Hohlrohr erfindungsgemäß auch mit Flügelansätzen wie bei den Ansätzen einer Flügelmutter versehen, um ein Festschrauben oder Lösen des Hohlrohres vom Siebdeckel zu begünstigen.

Für die Kalenderfunktion des neuen Hohlrohres ist es nach der Erfindung besonders zweckmäßig, wenn die Markierungen in der Ringfläche der Scheibe als Löcher, Stifte oder dergleichen ausgebildet sind, wenn zwischen dem Zeiger und dem Arretierring eine den Kegelstumpf des Hohlrohres übergreifende Arretierzunge vorgesehen ist und wenn der Zeiger mit einer den Markierungen zuordenbaren Arretiereinrichtung verbunden ist. Zwar kann man Arretierungen aufdrucken oder durch Aufbringen von Beschriftungen vorsehen, sehr deutlich und praktisch unzerstörbar kann man eine Markierung aber auch in Gestalt eines Loches oder in kinematischer Umkehr eines Stiftes ausgestalten. Handelt es sich bei den Markierungen in der Ringfläche der Scheibe um Löcher, dann wird die zugeordnete Arretiereinrichtung zweckmäßigerweise ein Stift sein, der neben dem Zeiger angebracht ist, so daß der Zeiger einer Monatsmarkierung, z.B. "Mai", in einfacher Weise dadurch zugeordnet werden kann, daß der Arretierstift am Zeiger in das entsprechende Loch neben dem "Mai" eingesteckt wird. Der Endverbraucher weiß dann, daß er das Reinigungsmittel im Mai neu in den Reinigungseinsatz eingefüllt hat. Selbstverständlich könnte die Markierung auch den Anfang, die Mitte oder das Ende eines Monats erfassen, so daß der 30-Tagesrhythmus noch genauer eingehalten werden kann.

Es versteht sich, daß umgekehrt die Markierung auch aus Stiften oder Ansätzen an der Scheibe bestehen kann, so daß die Arretiereinrichtung neben dem Zeiger dementsprechend Löcher aufweist. An der Funktion und Bedienung für den Endverbraucher ändert sich im Falle dieser kinematischen Umkehrung nichts.

Durch die Arretierzunge zwischen dem Zeiger und dem Arretierring kann die Markierung auf der Scheibe auch in größerem Abstand vom Hohlrohr angeordnet sein. Im allgemeinen ist nämlich der Durchmesser des Hohlrohres kleiner als der Durchmesser desjenigen Ringes auf der Scheibe, auf welchem die Markierungen angeordnet sind.

Bei vorteilhafter weiterer Ausgestaltung der Erfindung ist der erhabene Ansatz des Siebdeckels als Luftsammelraum ausgebildet und hat einen Durchmesser, der nur unwesentlich kleiner ist als der Durchmesser des kegelstumpfförmigen Flächenabschnittes mit den Siebschlitzen. Hierdurch ist erfindungsgemäß überraschend eine völlig andere Ausgestaltung des Siebdeckels im Vergleich zu den Siebdeckeln der bekannten Wasserreinigungsvorrichtungen vorgeschlagen. Für einen guten Wassereintritt durch die Siebschlitze ist der Durchmesser des kegelstumpfförmigen Flächenabschnittes mit den Siebschlitzen nicht wesentlich kleiner als der größte Außendurchmesser des Reinigungseinsatzes. Dadurch kann man nämlich viele Siebschlitze auf einer recht großen Ringfläche anbringen. Wenn nun der erhabene Ansatz im Gegensatz zu dem bei der eingangs erwähnten und bekannten Wasseraufbereitungsvorrichtung mit einem vergleichbar großen Durchmesser versehen ist, läßt sich ein großer Luftsammelraum über dem Kranz der Siebschlitze vorsehen, wodurch ersichtlich die Entlüftungsfunktion des neuen Siebdeckels verbessert ist.

Zweckmäßig ist es gemäß der Erfindung auch, wenn der Kegelstumpf des Hohlrohres auf der dem erhabenen Ansatz des Siebdeckels gegenüberliegenden Innenseite eine ringförmige Dichtlippe aufweist. Für eine gute Entlüftungsfunktion sollten die durch die Konstruktionsteile vorgesehenen Entlüftungskanäle durch einwandfreie Begrenzungen undeformiert während des gesamten Betriebes aufrechterhalten bleiben, auch wenn der Endverbraucher beispielsweise das Hohlrohr vom Siebdeckel oder den Siebdeckel vom Reinigungseinsatz abnimmt und danach wieder aufsetzt. Durch die ringförmige Dichtlippe auf der Innenseite des Hohlrohres ist gewährleistet, daß in das Hohlrohr nicht etwa zu reinigendes Wasser von oben oder von der Seite einströmt, sondern daß der Luftsammelraum über dem Kranz mit den Siebschlitzen einwandfrei mit dem Innenraum des Hohlrohres verbunden ist und bleibt.

Durch die Vergrößerung des erhabenen Ansatzes des Siebdeckels im Vergleich zu dem Ansatz bei der bekannten Wasseraufbereitungsvorrichtung und durch den entsprechend groß ausgebildeten Kegelstumpf am unteren, inneren Ende des Hohlrohres ist auch ein herstellungstechnischer Vorteil bedingt. Siebeinsatz, Hohlrohr und andere Teile der erfindungsgemäßen Wasseraufbereitungsvorrichtung bestehen nämlich aus Kunststoff, der in bekannter Weise durch Spritzgießen oder dergleichen verarbeitet wird. Vorzugsweise gestaltet man Hohlrohr und/oder Siebdeckel mit kegelstumpfförmigen oder konusförmigen Flächen aus, weil dann das Spritzwerkzeug einfacher ausgestaltet und besser entformt werden kann.

Ein ähnlicher herstellungstechnischer Vorteil ergibt sich erfindungsgemäß insbesondere auch dann, wenn das Außengewinde des Siebdeckels und/oder das Innengewinde des Hohlrohres als Rundgewinde ausgebildet ist/sind. Durch die verhältnismäßig große Ausgestaltung des erhabenen Ansatzes des Siebdeckels einerseits und des Kegelstumpfes am Hohlrohr andererseits ergibt sich der oben angedeutete Vorteil des Überdehnens beim Entformen. Wenn außerdem eines oder gar beide Gewinde als Rundgewinde ausgebildet ist/sind, wird das Überdehnen noch vereinfacht. Dadurch kann man beim Entformen das Gewinde besser am Werkzeug vorbeidrücken. Aus Gründen des Entformens und der Verbesserung der Herstellung wird im allgemeinen auch das Hohlrohr kegelstumpfförmig ausgebildet sein.

Die Erfindung ist in vorteilhafter Weiterbildung auch dadurch gekennzeichnet, daß bei in den Trichter der Wasseraufbereitungsvorrichtung eingesetztem Reinigungseinsatz mit aufgesetztem Siebdeckel und Hohlrohr das obere äußere, wenigstens eine Öffnung aufweisende Ende des Hohlrohres über die Oberkante des Trichters hinausragt. Mit anderen Worten ist die Länge des Hohlrohres in dem auf den Siebdeckel aufgeschraubten Zustand größer als die Höhe der Trichterwandung, so daß die wenigstens eine Öffnung des Hohlrohres an seinem oberen äußeren Ende nicht unter die Wasseroberfläche im Trichter zu liegen kommt. Es versteht sich, daß hierdurch die Entlüftungsfunktion des neuen Siebdeckels verbessert wird und außerdem der Endverbraucher eine noch bessere Handhabung hat.

Weitere Vorteile, Merkmale und Anwendungsmöglichkeiten der vorliegenden Erfindung ergeben sich aus der folgenden Beschreibung eines bevorzugten Ausführungsbeispiels in Verbindung mit den Zeichnungen. Es zeigen:
- Figur 1: teilweise im Schnitt die gesamte Wasseraufbereitungsvorrichtung mit Siebdeckel und aufgesetztem Hohlrohr,
- Figur 2: eine Seitenansicht des Siebdeckels,
- Figur 3: eine Seitenansicht des Hohlrohres mit Scheibe,
- Figur 4: eine Draufsicht auf Figur 3, d.h. auf das Hohlrohr mit dieses ringförmig außen umgebender Scheibe,
- Figur 5: eine Querschnittsansicht durch das Hohlrohr mit dem Kegelstumpf mit Innengewinde,
- Figur 6: den Arretierring, die Arretierzunge, den Zeiger und die als Stift ausgebildete Arretiereinrichtung,
- Figur 7: eine Draufsicht auf den Arretierring mit Zeiger und Arretierzungen,
- Figur 8: eine Seitenansicht des Hohlrohres mit Kegelstumpf und Scheibe, wobei der Arretierring mit Zeiger und Arretierzunge geschnitten angebracht gezeigt sind, und
- Figur 9: eine Draufsicht auf das Hohlrohr der Figur 8 mit unverlierbar an diesem angeordneten Arretierring und Zeiger.

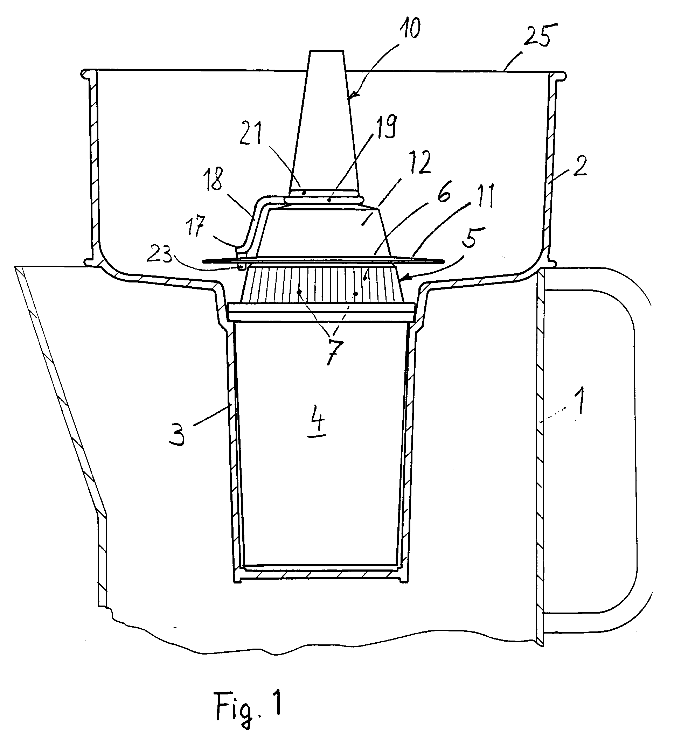

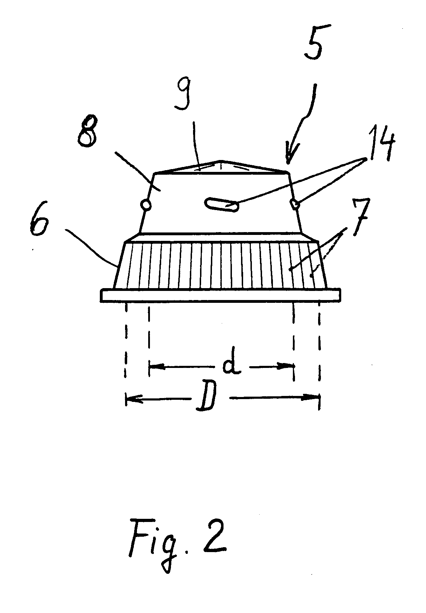

Aus Figur 1 erkennt man die gesamte Wasseraufbereitungsvorrichtung mit dem Sammelbehälter 1 mit nicht näher bezeichnetem Griff auf der rechten und der Ausgießtülle auf der gegenüberliegenden linken Seite der Figur 1. Oben auf dem Rand des Sammelbehälters 1 wird der Trichter 2 aufgesetzt, der unten eine Hülse 3 trägt. In dieser ist der nur schematisch gezeigte Reinigungseinsatz 4 angeordnet, der oben mit dem allgemein mit 5 bezeichneten Siebdeckel abgedeckt ist. Der Siebdeckel 5 ist genauer in Figur 2 dargestellt und weist einen konischen, ringförmigen Flächenabschnitt 6 mit geraden Siebschlitzen 7 auf, welche kranzartig die nicht bezeichnete Hauptachse umgreifen, welche in der Längsachse der Hülse 3 und damit auch des Reinigungseinsatzes 4 liegt. Der in Figur 2 gezeigte Siebdeckel 5 weist außerdem in der Mitte einen erhabenen Ansatz 8 auf, der oben mit Entlüftungsöffnungen 9 in Form feiner Schlitze versehen ist.

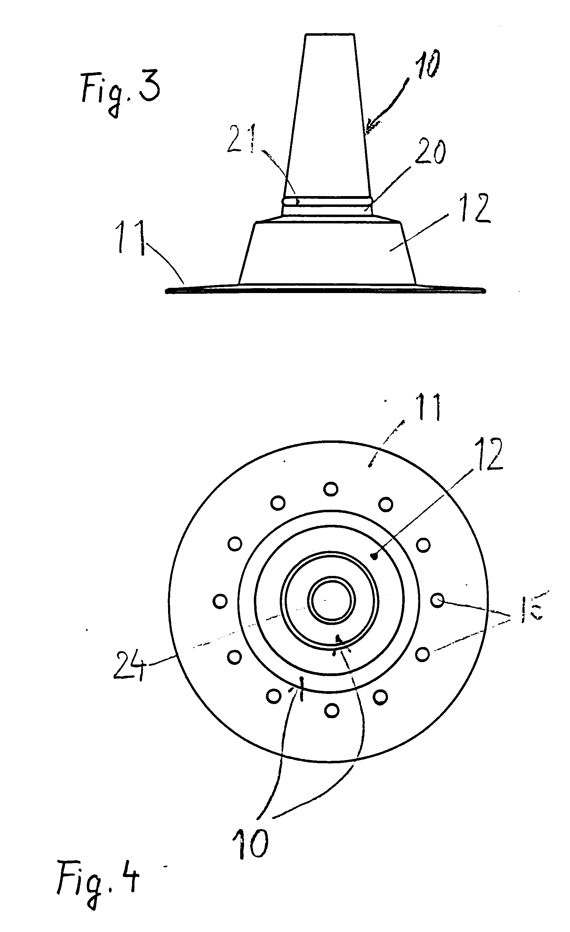

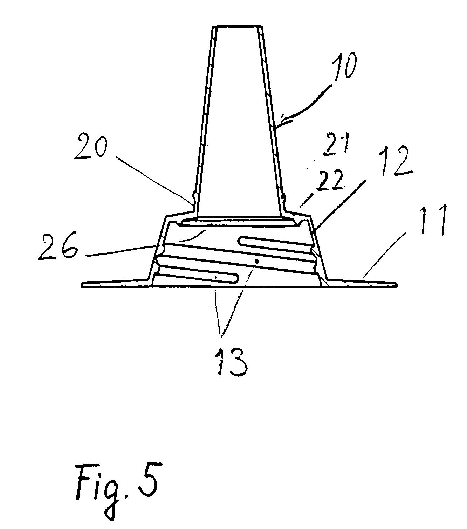

In Figur 1 sieht man ferner, daß auf dem erhabenen Ansatz 8 des Siebdeckels 5 ein allgemein mit 10 bezeichnetes Hohlrohr aufgesetzt bzw. besser aufgeschraubt ist. Das längliche, kegelstumpfförmige Hohlrohr 10 ist oben offen und weist in seinem unteren Teil neben der am unteren inneren Ende angebrachten ringförmigen Scheibe 11 einen Kegelstumpf 12 auf. Der Durchmesser dieses Kegelstumpfes 12 ist abgestuft größer als der des oberen Endes des Hohlrohres 10. Dieser Kegelstumpf 12 paßt auf den verdickten erhabenen Ansatz 8 des Siebdeckels 5. Das in Figur 5 gezeigte Innengewinde 13 dieses Kegelstumpfes 12 paßt auf das nur stückweise ausgebildete Außengewinde 14 des erhabenen Ansatzes 8. Sowohl das Außengewinde 14 des Ansatzes 8 als auch das Innengewinde 13 des Kegelstumpfes 12 des Hohlrohres 10 sind als Rundgewinde ausgestaltet.

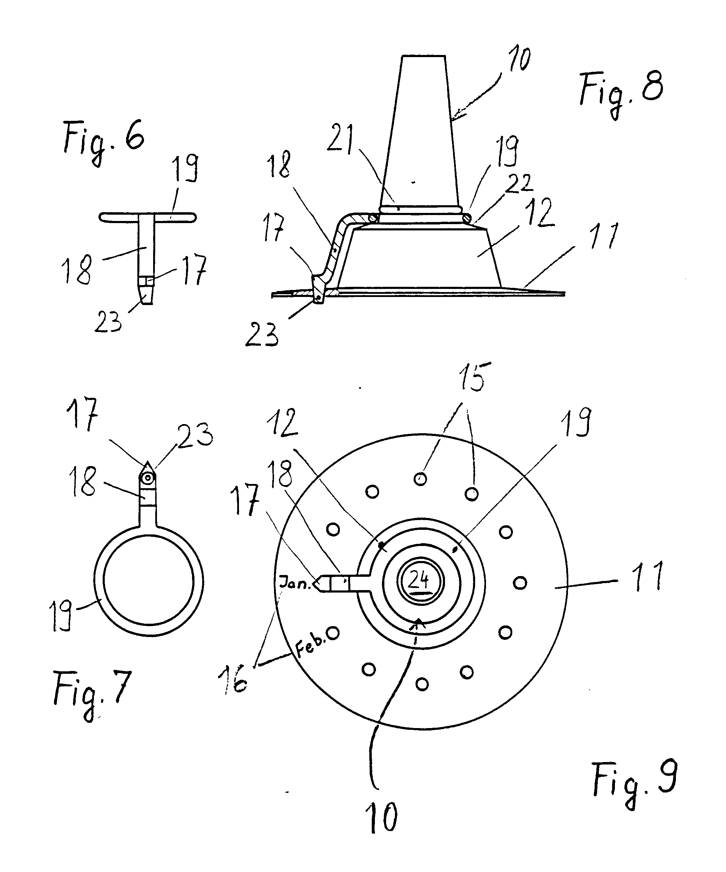

Blickt man von oben auf die ringförmige Fläche der Scheibe 11 gemäß Figuren 4 und 9, dann erkennt man die auf dieser oberen äußeren Fläche der Scheibe 11 vorgesehenen Markierungen 15 in Form von Löchern und in Form von Beschriftungen 16 ("JAN.; FEB.").

Während bei den Figuren 3 und 4 das Hohlrohr 10 mit Scheibe 11 für sich allein dargestellt ist, sieht man aus der Darstellung der Figur 8 und 9, wie den Markierungen 15, 16 ein Zeiger 17 zugeordnet ist. Dieser ist über eine Arretierzunge 18 an einem Arretierring 19 angebracht. Dieser liegt unverlierbar und drehbar in einer Hinterschneidung 20 (Figuren 3 und 5), die einerseits durch einen äußeren oberen Wulstring 21 und andererseits durch den Absatz 22 des Kegelstumpfes 12 gebildet ist.

Neben dem Zeiger 17 ist eine als Stift ausgebildete Arretiereinrichtung 23 angeformt. Dieser Arretierstift 23 ist in Figur 9 in das mit "Januar" bezeichnete Loch 15 eingesteckt.

In den Figuren 4 und 9 sieht man auch die Öffnung 24 des Hohlrohres 10, die bei der Anordnung der Figur 1 ersichtlich über die Oberkante 25 des Trichters 2 hinausragt.

Der Luftsammelraum im Siebdeckel 5 (Figur 2) läßt sich über dem kegelstumpfförmigen Flächenabschnitt 6 mit den Siebschlitzen 7 besonders dadurch günstig und groß ausgestalten, daß der Durchmesser d des erhabenen Ansatzes 8 nur unwesentlich kleiner ist als der Durchmesser D des kegelstumpfförmigen Flächenabschnittes 6. In Figur 2 sind mittlere Werte für die Durchmesser d, D der Kegelstümpfe 6, 8 angenommen, der Betrachter der Figur 2 erkennt aber sogleich die verdickte Ausgestaltung des Ansatzes 8 mit den Vorteilen des besseren Entformens nach dem Spritzvorgang des Siebdeckels 5.

In Figur 5 ist schließlich das Hohlrohr 10 im Schnitt dargestellt, ohne daß der Siebdeckel 5 eingeschraubt gezeigt ist. Man erkennt aber, daß der ringförmige, kegelstumpfförmige Ansatz 22, d.h. die Ringfläche, welche das erweiterte untere Ende des oberen Hohlrohres 10 mit dem schmaleren, verjüngten oberen Ende des Kegelstumpfes 12 verbindet, auf der Innenseite, auf welcher auch das Innengewinde 13 angeordnet ist, mit einer Dichtlippe 26 versehen ist. Diese Dichtlippe 26 umgibt in Gestalt eines Kreisringes die Öffnung zwischen dem Kegelstumpf 12 und dem oberen kleineren Kegelstumpf des Hohlrohres 10 in einer solchen Art, daß beim Einschrauben des Siebdeckels 5 die ringförmige Dichtlippe 26 auch um die Öffnungsschlitze 9 auf der Oberseite des Ansatzes 8 des Siebdeckels 5 herumlaufend zu liegen kommt. Im zusammengeschraubten Zustand gemäß Figur 1 sorgt die Dichtlippe 26 also dafür, daß dem Luftsammelraum, d.h. in dem erhabenen Ansatz 8 des Siebdeckels 5 gesammelte Luft ohne Störung durch von oben eintretendes Wasser durch die Schlitzöffnungen 9 in das Hohlrohr 10 austreten und nach oben durch die Öffnung 24 entweichen kann.

## Patentansprüche

1. Siebdeckel für einen Reinigungseinsatz (4) in einer Wasseraufbereitungsvorrichtung, wobei der Siebdeckel (5) auf einem konischen Flächenabschnitt (6) Siebschlitze (7) und in der Mitte eines erhabenen Ansatzes (8) mindestens eine Entlüftungsöffnung (9) aufweist und mit einem Hohlrohr (10) mit einer Scheibe (11) verbindbar ist, **dadurch gekennzeichnet,** daß die Siebschlitze (7) im wesentlichen gerade sind und kranzartig auf dem etwa 1/3 bis 1/2 der Höhe des Siebdeckels (5) einnehmenden, kegelstumpfförmigen Flächenabschnitt (6) angeordnet sind und daß auf der oberen, äußeren Ringfläche der Scheibe (11) Markierungen (15, 16) vorgesehen sind, denen ein verstellbarer Zeiger (17) Zugeordnet ist, der an einem unverlierbar und drehbar am Hohlrohr (10) angeordneten Arretierring (19) angebracht ist.

2. Siebdeckel nach Anspruch 1, dadurch gekennzeichnet, daß der Arretierring (19) in einer ringförmigen Hinterschneidung (20) gehalten ist und daß zwischen dieser und der Scheibe (11) ein Kegelstumpf (12) mit Innengewinde (13) angeordnet ist, der auf das Außengewinde (14) des erhabenen Ansatzes (8) des Siebdeckels (5) aufschraubbar ist.

3. Siebdeckel nach Anspruch 1 oder 2, dadurch gekennzeichnet, daß die Markierungen (15, 16) in der Ringfläche der Scheibe (11) als Löcher (15), Stifte oder dergleichen ausgebildet sind, daß zwischen dem Zeiger (17) und dem Arretierring (19) eine den Kegelstumpf (12) des Hohlrohres (10) übergreifende Arretierzunge (18) vorgesehen ist und daß der Zeiger (17) mit einer den Markierungen (15, 16) zuordenbaren Arretiereinrichtung (23) verbunden ist.

4. Siebdeckel nach einem der Ansprüche 1 bis 3, dadurch gekennzeichnet, daß der erhabene Ansatz (8) des Siebdeckels (5) als Luftsammelraum ausgebildet ist und einen Durchmesser (d) hat, der nur unwesentlich kleiner ist als der Durchmesser (D) des kegelstumpfförmigen Flächenabschnittes (6) mit den Siebschlitzen (7).

5. Siebdeckel nach einem der Ansprüche 1 bis 4, dadurch gekennzeichnet, daß der Kegelstumpf (12) des Hohlrohres (10) auf der dem erhabenen Ansatz (8) des Siebdeckels (5) gegenüberliegenden Innenseite eine ringförmige Dichtlippe (26) aufweist.

6. Siebdeckel nach einem der Ansprüche 1 bis 5, dadurch gekennzeichnet, daß das Außengewinde (14) des Siebdeckels (5) und/oder das Innengewinde (13) des Hohlrohres (10) als Rundgewinde ausgebildet ist/sind.

7. Siebdeckel nach einem der Ansprüche 1 bis 6, dadurch gekennzeichnet, daß bei in den Trichter (2) der Wasseraufbereitungsvorrichtung eingesetztem Reinigungseinsatz (4) mit aufgesetztem Siebdeckel (5) und Hohlrohr (10) das obere äußere, wenigstens eine Öffnung (24) aufweisende Ende des Hohlrohres (10) über die Oberkante (25) des Trichters (2) hinausragt (Figur 1).

## Claims

1. A filter cover for a purification insert (4) in a water treatment apparatus, wherein the filter cover (5) has filter slits (7) on a conical surface portion (6) and has at least one vent opening (9) in the middle of a raised projection portion (8) and can be connected to a hollow tube (10) with a disc (11), characterised in that the filter slits (7) are substantially straight and are arranged in a ring on the frustoconical surface portion (6) which occupies about one-third to one-half of the height of the filter cover (5) and that provided on the upper outer annular surface of the disc (11) are markings (15, 16) with which there is associated a displaceable pointer (17) which is mounted on an arresting ring (19) arranged non-detachably and rotatably on the hollow tube (10).

2. A filter cover according to claim 1 characterised in that the arresting ring (19) is held in an annular undercut configuration (20) and that disposed between same and the disc (11) is a frustoconical portion (12) with internal screwthread (13), which can be screwed on to the external screwthread (14) of the raised projection portion (8) of the filter cover (5).

3. A filter cover according to claim 1 or claim 2 characterised in that the markings (15, 16) in the annular surface of the disc (11) are in the form of holes (15), pins or the like, that provided between the pointer (17) and the arresting ring (19) is an arresting tongue (18) which extends over the frustoconical portion (12) of the hollow tube (10) and that the pointer (17) is connected to an arresting means (23) which can be associated with the markings (15, 16).

4. A filter cover according to one of claims 1 to 3 characterised in that the raised projection portion (8) of the filter cover (5) is in the form of an air collecting space and is of a diameter (d) which is only insignificantly smaller than the diameter (D) of the frustoconical surface portion (6) having the filter slits (7).

5. A filter cover according to one of claims 1 to 4 characterised in that the frustoconical portion (12) of the hollow tube (10) has an annular sealing lip (26) on the inward side which is opposite the raised projection portion (8) of the filter cover (5).

6. A filter cover according to one of claims 1 to 5 characterised in that the external screwthread (14) of the filter cover (5) and/or the internal screwthread (13) of the hollow tube (10) is/are in the form of a round screwthread.

7. A filter cover according to one of claims 1 to 6 characterised in that, when the purification insert (4) with fitted filter cover (5) and hollow tube (10) is inserted into the funnel (2) of the water treatment apparatus, the upper outer end of the hollow tube (10), which has at least one opening (24), projects beyond the upper edge (25) of the funnel (2) (Figure 1).

## Revendications

1. Couvercle à tamis pour un insert de nettoyage (4) dans un dispositif d'épuration de l'eau, le couvercle à tamis (5) possédant, dans un élément de surface conique (6), des fentes de tamisage (7) et, au centre d'une partie saillante surélevée (8), au moins une ouverture de désaération (9), et peut être raccordé par un tube creux (10) à un disque (11), caractérisé en ce que les fentes de tamisage (7) sont sensiblement rectilignes et sont disposées sur une couronne dans un élément de surface tronconique (6) qui occupe environ 1/3 à 1/2 de la hauteur du couvercle à tamis (5), et en ce que sur la surface annulaire supérieure extérieure du disque (11) sont disposées des marques (15,16), auxquelles est associée une aiguille réglable (17), qui est montée sur une bague de retenue (19) disposée de manière à être imperdable et à pouvoir tourner sur le tube creux (10).

2. Couvercle à tamis selon la revendication 1, caractérisé en ce que la bague de blocage (19) est maintenue dans une partie annulaire en dépouille (20) et en ce qu'entre cette dernière et le disque (11) est disposé un tronc de cône (12) comportant un taraudage (13), qui est vissable sur le filetage extérieur (14) de la partie saillante surélevée (8) du couvercle à tamis (5).

3. Couvercle à tamis selon la revendication 1 ou 2, caractérisé en ce que les marques (15,16) ménagées dans la surface annulaire du disque (11) sont agencées sous la forme de trous (15), de tiges ou analogues, en ce qu'entre l'aiguille (17) et l'anneau de blocage (19) est disposée une languette de blocage (18) qui s'étend au-dessus du tronc de cône (12) du tube creux (10) et en ce que l'aiguille (17) est raccordée à un dispositif de blocage (23) pouvant être associé aux marques (15,16).

4. Couvercle à tamis selon l'une des revendications 1 à 3, caractérisé en ce que la partie saillante surélevée (8) du couvercle à tamis (5) est agencée sous la forme d'un espace de collecte de l'air et possède un diamètre (d) qui est seulement très légèrement inférieur au diamètre (D) de l'élément de surface tronconique (6) pourvu des fentes de tamisage (7).

5. Couvercle à tamis selon l'une des revendications 1 à 4, caractérisé en ce que le tronc de cône (12) du tube creux (10) possède, sur sa face intérieure tournée l'opposé de la partie saillante surélevée (8) du couvercle à tamis (5), une lèvre d'étanchéité annulaire (26).

6. Couvercle à tamis selon l'une des revendications 1 à 5, caractérisé en ce que le filetage extérieur (14) du couvercle à tamis (5) et/ou le taraudage (13) du tube creux (10) est/sont réalisés sous la forme d'un ou de deux filetages circulaires.

7. Couvercle à tamis selon l'une des revendications 1 à 6, caractérisé en ce que, dans l'insert de nettoyage (4) disposé dans l'entonnoir (2) du dispositif d'épuration de l'eau et sur lequel est monté le couvercle à tamis (5) et qui comporte le tube creux (10), l'extrémité supérieure extérieure, qui possède au moins une ouverture (24), du tube creux (10) fait saillie au-dessus du bord supérieur (25) de l'entonnoir (2). (Figure 1).
